# EUROPÄISCHE PATENTSCHRIFT

(11) **EP 1 210 813 B1**
(45) Veröffentlichungstag und Bekanntmachung des Hinweises auf die Patenterteilung: **17.11.2004**
(21) Anmeldenummer: 00963968.3
(22) Anmeldetag: 06.09.2000
(51) Int. Cl.: H04M 3/30, H04Q 1/20

(54) **LOKALISIERUNG EINES GESTÖRTEN STRECKENABSCHNITTS IN EINER AKTIVEN LANGZEITVERBINDUNG**
LOCATING A FAULTY LINK SECTION IN AN ACTIVE LONG-TERM CONNECTION
LOCALISATION D'UNE SECTION DEFECTEUSE D'UNE CONNEXION SEMI-PERMANENTE ACTIVE

(30) Priorität: 07.09.1999 DE 19942690
(43) Veröffentlichungstag der Anmeldung: 05.06.2002
(73) Patentinhaber: SIEMENS AKTIENGESELLSCHAFT, 80333 München (DE)
(72) Erfinder: GNEITING, Dieter, 81375 München (DE); ZISCHKA, Harald, A-2380 Perchtoldsdorf (AT)
(74) Vertreter: Berg, Peter
(86) Internationale Anmeldenummer: PCT/DE2000/003082
(87) Internationale Veröffentlichungsnummer: WO 2001/019061

(56) Entgegenhaltungen:
- US-A- 4 402 075
- US-A- 4 564 933
- US-A- 4 939 747
- US-A- 5 010 544

## Beschreibung

Die vorliegende Erfindung bezieht sich auf ein Verfahren und ein System zur Lokalisierung eines gestörten Streckenabschnitts in einer aktiven Langzeitverbindung.

Eine Langzeitverbindung stellt einen ergänzenden Dienst dar, der durch Leistungsmerkmale von Vermittlungsknoten des öffentlichen Netzes realisiert werden kann und von dessen Betreiber angeboten wird. Ergänzende Dienste der öffentlichen Netze kamen im wesentlichen erst durch den mit der Digitalisierung verbundenen Innovationsschub mit einhergehender Leistungserweiterung der Steuerungen von Vermittlungsknoten und Endgeräten zur Einführung. Ergänzende Dienste stehen daher im wesentlichen nur Teilnehmern an digitalen Netzknoten zur Verfügung.

Ein solcher ergänzender Dienst ist bspw. die Langzeitverbindung (Nailed Up Connection, NUC), die eine fest durchgeschaltete Verbindung zwischen zwei Teilnehmeranschlüssen und zwischen Teilnehmer- und Verbindungsleitungsanschlüssen bietet.

Eine Nailed Up Connection (NUC) - auch als Semipermanent Leased Line, Standverbindung oder Direktrufverbindung bezeichnet - ist im Gegensatz zur Wählverbindung, bei der ein Teilnehmer zu einem beliebigen Zeitpunkt eine Verbindung mittels Eingabe von Wahlinformation zu unterschiedlichen Partner-Teilnehmern aufbaut und auch wieder abbaut, eine fixe Verbindung zwischen zwei Teilnehmern, die vom Betreiber eines Netzes zur Verfügung gestellt wird und vom Benutzer uneingeschränkt zur Informationsübertragung verwendet werden kann. Es ist hierbei nicht von Belang, ob diese Nailed Up Connection einmal für einen bestimmten Zeitraum, regelmäßig für einen bestimmten Zeitraum oder fest bis auf Widerruf zur Verfügung gestellt wird.

Kennzeichen einer NUC ist im Gegensatz zur Wählverbindung, dass der Teilnehmer keine Auswahl eines Partner-Teilnehmers hat, ohne dass er über seinen Netzbetreiber eine andere Verbindung auf administrativem Weg anfordert. Andererseits garantiert der Netzbetreiber ihm eine entsprechende Verfügbarkeit der Verbindung, d. h. im Fehlerfall muss er möglichst rasch für die Wiederherstellung dieser Verbindung sorgen.

Historisch wurden Nailed Up Connections immer in einem eigenständigen Netz aufgebaut, wobei die Verbindungen ursprünglich physikalisch geschaltet, später über sogenannte Cross Connects hergestellt wurden. Der Vorteil dieser separaten Netze war vor allem die Stabilität und die Einfachheit ihrer Bedienung, da Verbindungen ausschließlich durch den Netzbetreiber aufgebaut oder ausgelöst wurden. Für eine NUC wurde hierbei immer der gesamte (physikalische) Teilnehmer-Zugang verwendet, auch wenn die Informationsübertragung im Netz bereits digital war.

Diese Technik des Schaltens von NUCs war jedoch mit Einzug der Digitalisierung im Teilnehmerbereich - die allgemein unter dem Begriff Integrated Services Digital Network (ISDN) Einzug gehalten hat - nicht mehr möglich, da bereits im Teilnehmerbereich ein mehrkanaliger, digitaler Zugang existiert (z. B. Basic Access mit 2 Kanälen, Primary Rate Access mit 30 Kanälen, mit Einzug der xDSL-Technik auch eine variable Anzahl von Kanälen). Da es damit erforderlich war, den Zugang des Teilnehmers parallel sowohl für NUCs als auch für Wählverbindungen zu nutzen, mussten NUCs den Zugang des Teilnehmers zum PSTN (Public Switched Telephone Network, Öffentliches Netz) mitbenutzen. Konsequenterweise wurden daher diese digitalen NUCs auch über das digitale Telekommunikationsnetz geführt, d. h. dieselben Ressourcen werden nun sowohl für Wählverbindungen als auch für NUCs benutzt. Der einzige Unterschied besteht weiterhin darin, dass Wählverbindungen dem Verantwortungsbereich des Teilnehmers unterliegen, während NUCs im Verantwortungsbereich des Netzbetreibers liegen.

Dieselbe Technik wird auch für die Verbindung von analogen Teilnehmer-Anschlussschaltungen benutzt, wobei hier an der Netzschnittstelle eine Analog-Digital-Wandlung durchgeführt wird; im Netz wird die Verbindung prinzipiell digital geführt.

Die Realisierung einer derartigen NUC erfolgt dadurch, dass in einem Netzverwaltungszentrum die Netzführung zwischen den beteiligten beiden Teilnehmern festgelegt wird und die NUC dann abschnittsweise aufgebaut wird. Ein Streckenabschnitt umfasst hierbei jeweils die Strecke zwischen einem Teilnehmer und einer Verbindungsleitung oder zwischen zwei Verbindungsleitungen und bezieht sich auf den Bereich einer Vermittlungsstelle. Eine Signalisierung zwischen den Vermittlungsstellen, zwischen Vermittlungsstelle und Teilnehmer und auch zwischen den Teilnehmern im Sinne einer Outslot-Signalisierung findet nicht statt. Signalisierung zwischen den Teilnehmern kann nur transparent ( Inslot) durch Übertragung von Steuerinformation innerhalb des durchgeschalteten Kanals erfolgen; die Vermittlungsstelle hat keinerlei Zugriff auf diese Information.

Störungen auf einer bestehenden Verbindung können entweder vom Netz selbst erkannt werden, weil entsprechende Netzkomponenten eine Fehlermeldung absetzen, oder vom Teilnehmer, weil seine Verbindungsübertragung gestört oder beeinträchtigt ist. Störungen, die vom Netz erkannt werden, führen im allgemeinen Fall zur Auslösung der von der Störung betroffenen Verbindungen. Im Falle von NUC ist es üblich, dass die Vermittlungsstelle automatisch versucht einen Ersatzweg zu finden und darauf die NUC ersatzzuschalten.

Im Gegensatz dazu ist es im Falle von Wählverbindungen ausschließlich Aufgabe des Benutzers, eine neue Verbindung aufzubauen. Er wird hierbei automatisch einen Ersatzweg erhalten, oder, falls beim Verbindungsaufbau fehlerhafte Ressourcen benutzt werden, wird dies üblicherweise beim Aufbau durch entsprechende Tests festgestellt und der Betreiber alarmiert. Wird eine Störung direkt vom Teilnehmer erkannt, ohne dass eine automatische Alarmierung in der Vermittlungsstelle stattfindet, weil es sich z. B. um einen Ausfall in einem nicht automatisch überwachten Teil der Verbindung handelt oder um einen Übertragungsabschnitt mit hoher Fehlerrate (z. B. Rauschen, Echo, Nebensprechen, ...) so wird der Teilnehmer bei einer Wählverbindung ebenso verfahren, d. h. eine neue Verbindung mit i. a. anderer Wegeführung aufbauen.

Im Fall einer NUC ist dieses Verfahren jedoch nicht allgemein anwendbar, da
(1)nur der Netzbetreiber Zugriff auf den Verbindungsauf- und - abbau besitzt,
(2)die Prüfmöglichkeiten wegen der fehlenden Signalisierung sehr eingeschränkt sind,
d. h. der Benutzer hat für sich keine Möglichkeit, diese Störung zu beheben.

Stellt der Benutzer einer NUC eine Störung fest, so hat er nur die Möglichkeit, diese dem Netzbetreiber mitzuteilen. Dieser hat allerdings auch keine Möglichkeit, die aufgebaute (aktive) NUC-Verbindung direkt zu prüfen, da sämtliche im öffentlichen Netz vorhandenen Prüfgeräte immer nur Leitungen prüfen, die im Zustand "frei" oder "gestört" sind, d. h. nicht durch eine aufgebaute Verbindung belegt sind. Insbesondere sind stabil aufgebaute NUCs derzeit nicht direkt prüfbar. Daher hat der Betreiber gemäß dem Stand der Technik verschiedene indirekte Möglichkeiten, die Störung zu lokalisieren und zu beheben:
(1)Entsenden von Entstörpersonal an die beiden Endpunkte (=Terminals) der NUC, um die Störung feststellen zu können und eventuelle Endgeräteprobleme auszuschließen,
(2)Modifikation der NUC "auf Verdacht", d. h. gezieltes Umschalten in zwei benachbarten Vermittlungsstellen,
(3)Prüfen der nunmehr freien Ressourcen, ob ein Fehler dort feststellbar ist, oder
(4)Verbinden der beiden Endpunkte der NUC zu einem freien Port in der Vermittlungsstelle, dort Anschluss eines separaten Prüfgeräts, um auch lokal Fehler im Teilnehmerbereich zu lokalisieren

Diese Methode hat nicht nur den Nachteil, dass sie sehr zeitund kostenaufwendig ist, auch die Lokalisierung und Entstörung des Fehlers ist sehr komplex, da sie die Synchronisation des vor Ort anwesenden Prüfpersonals mit dem in den beteiligten Vermittlungsstellen anwesenden Bedienpersonal erfordert. Generell ist diese Methode dadurch gekennzeichnet, dass die Prüfung dezentral, d. h. durch geographisch getrennte Prüfund Bedienkräfte erfolgt.

Der zweite Nachteil liegt darin, dass mit dieser Methode im allgemeinen Fall die Störung nur auf eine komplette Vermittlungsstelle eingeschränkt werden kann, da sie immer den Anschluss von zwei Prüfgeräten voraussetzt, die z. B. am Hauptverteiler der Vermittlungsstelle eingeschleift werden.

Zum Lösen dieser Aufgabe wird in der US 5,010,544 ein Verfahren zum Erkennen von Fehlerstellen in einem Übertragungsnetzwerk dargestellt. Eine Vielzahl von bidirektionalen Verbindungen werden zum Übertragen der Daten zw. zwei Terminals hergenommen. Eine Überprüfungseinheit ist mit dem ersten Ende der ersten Verbindung verbunden und überwacht die Übertragung des Kontrollsignals in der ersten Verbindung L1. Ein Vielzahl von Repeaters werden zum Zusammenschalten der bidirektionalen Verbindungen hergenommen. Jeder Repeaters enthält eine erste Schaltung zum Übertagen der Daten aus der Verbindung Li in die Verbindung Li+1 und einen zweiten Schaltung zum Übertragen der Daten aus der Verbindung Li+1 in die Verbindung Li. Zusätzlich ist in jedem Verstärker eine Spiegeleinheiten enthalten, die auf ein Kontrollsignal anspringt und die Daten die von der Verbindung Li übertagen werden zurücksendet. Die Spiegeleinheiten können auch an anderer Stelle in dem Übertragungsnetzwerk enthalten sein, so dass eine einzige Überprüfungseinheit zur Fehlersuche im gesamten Netzwerk herangezogen werden kann. Die Überprüfungseinheit sendet nach einem bestimmten Protokoll vorgegebene Kontrollsignale um die Spiegeleinrichtungen zu aktivieren oder deaktivieren.

In der US 4,564,933 wird ein Verfahren zum Überprüfen einer optischendigitalen Übertragungseinheit beschrieben, wobei ein aus einer Anzahl von Bits bestehende Prüfsignal von einer Endstelle gesendet wird. Die Bitlänge des Prüfsignals bestimmt welcher Regenerator in der Übertragungsanlage angesprochen wird und bewirkt eine Rückschlaufung in diesem. Durch Änderung der Mischung der Bits wird die Höhe des im Regenerator erzeugte Gleichspannung verändert. Die Höhe der Gleichspannung wird mit einem Referenzwert verglichen.

Ausgehend von dem dargestellten Stand der Technik ist es Aufgabe der vorliegenden Erfindung, eine Technik zur Lokalisierung eines gestörten Streckenabschnitts in einer Langzeitverbindung bereitzustellen, die auch bei aktiv geschalteten Langzeitverbindung ausgeführt werden kann.

Diese Aufgabe wird erfindungsgemäß durch die Merkmale der unabhängigen Ansprüche 1 und 5 gelöst. Die abhängigen Ansprüche bilden den zentralen Gedanken der vorliegenden Erfindung in besonders vorteilhafter Weise weiter.

Erfindungsgemäß ist also ein Verfahren zur Lokalisierung eines gestörten Streckenabschnitts einer aktiven Langzeitverbindung vorgesehen. Die aktive Langzeitverbindung besteht aus mehreren Streckenabschnitten. Die Langzeitverbindung wird aufgetrennt und eine Prüfeinrichtung an einem Auftrenn-Punkt der Langzeitverbindung aktiviert bzw. im Fall einer externen Prüfeinrichtung eingeschleift. Spiegeleinrichtungen, die eingehende Signale unverändert zurücksenden, werden stufenweise fortschreitend von einem von dem Auftrenn-Punkt abgelegenen Punkt der Langzeitverbindung aus in Richtung des Auftrenn-Punkts aktiviert, bis der gestörte Streckenabschnitt der Langzeitverbindung gefunden ist. Dazu sendet die Prüfeinrichtung zu der jeweils aktivierten Spiegeleinrichtung ein Prüfsignal und wertet das gespiegelte Signal auf seine Störungsfreiheit hin aus.

Die Spiegeleinrichtungen können jeweils in Koppelnetzen zwischen zwei Streckenabschnitten aktiviert werden.

Die Prüfeinrichtung kann zwei Nutzkanäle aufweisen.

Die Prüfeinrichtung kann ein vorbestimmtes Test-Bitmuster aussenden.

Erfindungsgemäß ist weiterhin ein System zur Lokalisierung eines gestörten Streckenabschnitts in einer aktiven Langzeitverbindung vorgesehen, wobei die Langzeitverbindung aus mehreren Streckenabschnitten aufgebaut ist. Ein Streckenabschnitt kann ein einer Vermittlungsstelle zugeordneter Bereich sein. Es ist eine Prüfeinrichtung vorgesehen, die an einem Auftrenn-Punkt der Langzeitverbindung aktiviert oder für den Fall einer externen Prüfeinrichtung eingeschleift wird. Eine Netz-Steuereinheit aktiviert stufenweise Spiegeleinrichtungen, die eingehende Signale unverändert zurücksenden, von einem von dem Auftrenn-Punkt abgelegenen Punkt der Langzeitverbindung aus in Richtung der Prüfeinrichtung, bis der gestörte Streckenabschnitt der Langzeitverbindung gefunden ist. Die Prüfeinrichtung ist zum Aussenden eines Prüfsignals zu der jeweils aktivierten Spiegeleinrichtung und zum Auswerten des gespiegelten Signals auf seine Störungsfreiheit hin programmiert.

Die Spiegeleinrichtungen können jeweils in (digitalen) Koppelnetzen zwischen zwei Streckenabschnitten (Bereich einer Vermittlungsstelle) aktivierbar sein.

Die Prüfeinrichtung kann zwei Nutzkanäle (beispielsweise ISDN-Standard) haben.

Die den jeweiligen Streckenabschnitten zugeordneten Vermittlungsstellen können jeweils ein Remote-Terminal zum Aktivieren/Deaktivieren der Spiegeleinrichtungen der Streckenabschnitte angesteuert durch die Netz-Steuereinheit aufweisen.

Weitere Merkmale, Eigenschaften und Vorteile der vorliegenden Erfindung werden aus der folgenden Beschreibung eines Ausführungsbeispiels und bezugnehmend auf die begleitenden Figuren der Zeichnungen näher ersichtlich.

Figur 1 zeigt eine schematische Darstellung einer Langzeitverbindung mit einem erfindungsgemäßen System zur Störungs-Lokalisierung, und

Figur 2 zeigt ein Flussdiagramm eines Verfahrens zur Störungs-Lokalisierung gemäß der vorliegenden Erfindung.

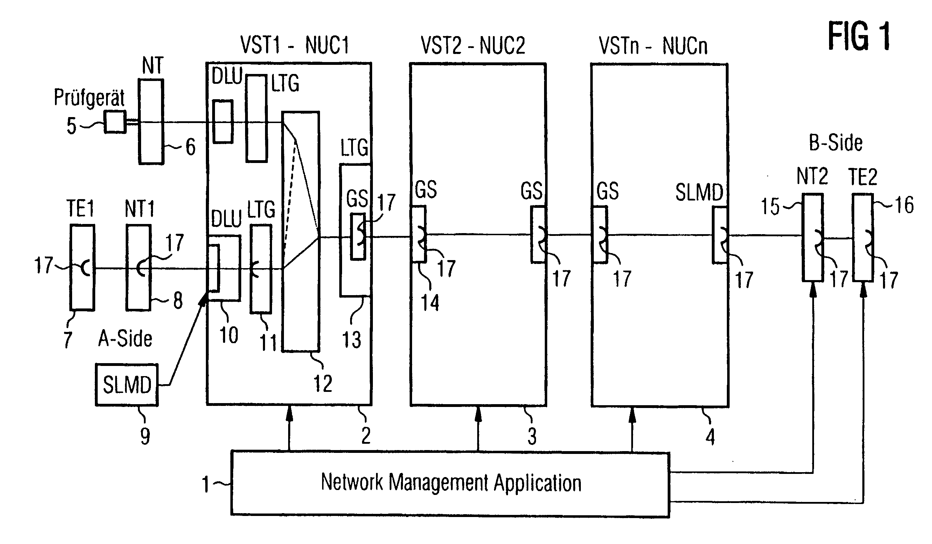

Bezugnehmend auf Figur 1 soll nunmehr eine Langzeitverbindung (NUC) mit einem erfindungsgemäßen System zur Lokalisierung eines gestörten Streckenabschnitts 2, 3, 4 der aktiv geschalteten Langzeitverbindung erläutert werden. Die Langzeitverbindung gemäß Figur 1 stellt eine Verbindung zwischen einem ersten Teilnehmeranschluss 7 und einem zweiten Teilnehmeranschluss 16 her. Im ungestörten Zustand kann somit eine Signalübertragung von der Seite des ersten Teilnehmeranschlusses zu dem zweiten Teilnehmeranschluss 16 bzw. umgekehrt ausgeführt werden. Die gesamte Langzeitverbindung besteht aus dem Teilnehmeranschluss (TE1, TE2), dem Netzwerkabschluss (Network Termination NT1, NT2) und mehreren durch digitale Koppelnetze (als Bestandteil der Vermittlungsstellen VST1, VST2, ... VSTn) verbundenen Streckenabschnitten.

Die Vermittlungsstelle 2 weist digitale Leitungseinheiten (Digital Line Unit, DLU) auf, wobei eine der DLUs mit dem Netzwerkanschluss NT1 für den Teilnehmeranschluss TE1 und die andere DLU mit einem Netzwerkanschluss beispielsweise zum Anschließen eines externen Prüfgeräts 5 verbunden ist. In der Vermittlungsstelle 1 kann die Langzeitverbindung durch einen Koppelschalter 12 aufgetrennt werden, so dass der Netzwerkanschluss 6 einen Auftrenn-Punkt der Langzeitverbindung darstellt. Mittels Koppelnetzen (Group Switch, GS) sind die einzelnen Streckenabschnitte der Langzeitverbindung digital untereinander verbunden.

Die Erfindung befasst sich mit dem Verfahren, vorhandene Störungen in Streckenabschnitten, die als NUC geschaltet sind, zu lokalisieren, wobei die aktive NUC aufgebaut stehen bleibt.

Eine digitale, durchgeschaltete Verbindung besteht aus der Hintereinanderschaltung der physikalischen Streckenabschnitte 2, 3, 4, die im Lauf der Verbindung digital miteinander durch die Koppelnetze verkoppelt sind. Beispiele für Koppelnetze sind Network Termination am ISDN-Anschluss, Anschlussbaugruppen, periphere Konzentratoren und Koppelnetze in der Vermittlungsstelle. Dies gilt identisch für analoge Teilnehmer an einer digitalen Vermittlungsstelle, da hier lediglich der Teilabschnitt zwischen Teilnehmer und Vermittlungsstelle analog betrieben wird.

Die Koppelnetze bieten im allgemeinen die Möglichkeit, nicht nur zwei Koppelpunkte zu verbinden, sondern auch sogenannte Spiegel 17 einzulegen. Diese Spiegel 17 sind vom Betreiber ein- und auslegbar und werden u. a. dazu verwendet, um vor dem Aufbau einer Wählverbindung einen oder mehrere physikalische Streckenabschnitte zu prüfen. Dabei ist es nicht von Belang, ob diese Spiegelfunktion als Hardware- oder als Softwarelösung bereitgestellt wird. Wesentliche Eigenschaften dieser Spiegel 17 sind:
- Empfangene digitale Information muss unverzüglich zurückgesendet werden
- Der Spiegel muss steuerbar sein, d. h. durch ein lokal oder remote eingegebenes Steuerkommando einlegbar und wieder aufhebbar sein.

Die Idee besteht darein, die NUC an einer beliebigen Stelle innerhalb einer Vermittlungsstelle aufzutrennen und an der Trennstelle das externe Prüfgerät 5 mit zwei Nutzkanälen anzuschließen (z. B. über die zwei Nutzkanäle eines ISDN interface) oder eine Prüfeinrichtung in einer Vermittlungsstelle durch ein entsprechendes Kommando zu aktivieren.

Die Vermittlungsstelle, in der die NUC aufgetrennt wird, kann hierbei beliebig im Verlauf der NUC gewählt werden.

Damit besteht die NUC nun aus zwei Teilabschnitten. Zuerst wird mittels des externen Prüfgeräts 5 lokalisiert, auf welchem der beiden Teilabschnitte der Fehler liegt; hierzu ist jeweils an der entferntesten Stelle beim Teilnehmer ein Spiegel 17 einzulegen. Dieser Spiegel 17 kann sich entweder noch im Terminal des Teilnehmers oder im öffentlichen Netzbereich möglichst nahe an der Schnittstelle zur Teilnehmerschaltung befinden (z. B. auch im Analog-Digital-Wandler beim analogen Teilnehmer). Das Prüfgerät 5 sendet daraufhin ein Testmuster, das am Spiegel 17 reflektiert und vom Prüfgerät 5 empfangen wird. Ausgehend von der Annahme, dass sich eine Störung auf dem Teilabschnitt befindet, wird das Prüfmuster nicht oder fehlerhaft empfangen.

Danach kann am fehlerhaften Teilabschnitt stufenweise vom Teilnehmer rückwärts ein Spiegel 17 in der Network Termination NT, in der Teilnehmeranschlussgruppe (Subscriber Line Module SLM) und stufenweise in allen Koppelnetzen innerhalb der Orts-Vermittlungsstelle des Teilnehmers bis hin zur Trunk-Schnittstelle in Richtung auf das Prüfgerät 5 zur eingelegt werden und die obige Prozedur der Aussendung eines Prüfsignals und des Empfangs des gespiegelten Prüfsignals wiederholt werden. Damit kann der Fehler auf den jeweiligen Streckenabschnitt genau geortet werden. Dieser Vorgang kann über mehrere Vermittlungsstellen hinaus durchgeführt werden.

Wenn ein Fehler lokalisiert ist, können entsprechende Umkonfigurations- und Behebungsmaßnahmen ergriffen werden. Die Prüfung kann wie gesagt sowohl mittels des externen Prüfgeräts 5 als auch intern innerhalb einer Vermittlungsstelle durch spezielles systemeigenes Testequipement möglich sein.

Diese Netzfehler können somit voll unter Regie des Betreibers lokalisiert werden, ohne dass der Benutzer zur Mithilfe herangezogen werden muss. Es muss lediglich die Bedienung der einzelnen Vermittlungsstellen über ein Remote-Bedienterminal gewährleistet sein, über das die einzelnen Spiegel 17 in den Koppelnetzen gezielt gesteuert werden können.

Derzeit ist die Prüfung von Ressourcen nur auf freien Leitungen möglich, da davon ausgegangen wird, dass der Benutzer einer fehlerhaften Leitung durch Wiederwahl längst eine andere Verbindung aufgebaut hat. Die Prüfung von Ressourcen kann daher nur durch eine gezielte Prüfung eines Streckenabschnitts erfolgen.

Der Vorteil der Erfindung liegt darin, dass durch die Prüfung auf einer aufgebauten (aktiven) Langzeitverbindung zwischen zwei Endpunkten, d. h. "End to End" mit stufenweisem Test auf das Prüfgerät zu, genau der gemeldete Fehler auf einen Streckenabschnitt eingegrenzt werden kann. Hierdurch ist es insbesondere möglich, zwischen Fehlern im Netz und Fehlern in der Teilnehmerschaltung zu unterscheiden.

Der Vorteil liegt insbesondere im ferngesteuerten Auftrennen und in der Zwischenschaltung einer Spiegelfunktion innerhalb einer aktiven NUC zur Prüfeinheit, um dann eine schrittweises gezieltes Prüfen dieser NUC mittels dieser Spiegel zu ermöglichen. Die Konfiguration der Prüfeinheit, die Senden, Empfangen und Bewerten der Prüfmuster übernimmt, ist hierbei ohne Belang, d. h. es kann sich hier um ein extern angeschlossenes Prüfgerät oder um eine intern in der Vermittlungsstelle vorhanden Prüfeinrichtung handeln, die dann über dieselbe Schnittstelle wie die Spiegel gesteuert wird. Wesentlich ist nur, dass dieser Prüfeinrichtung in die NUC eingeschleift werden kann.

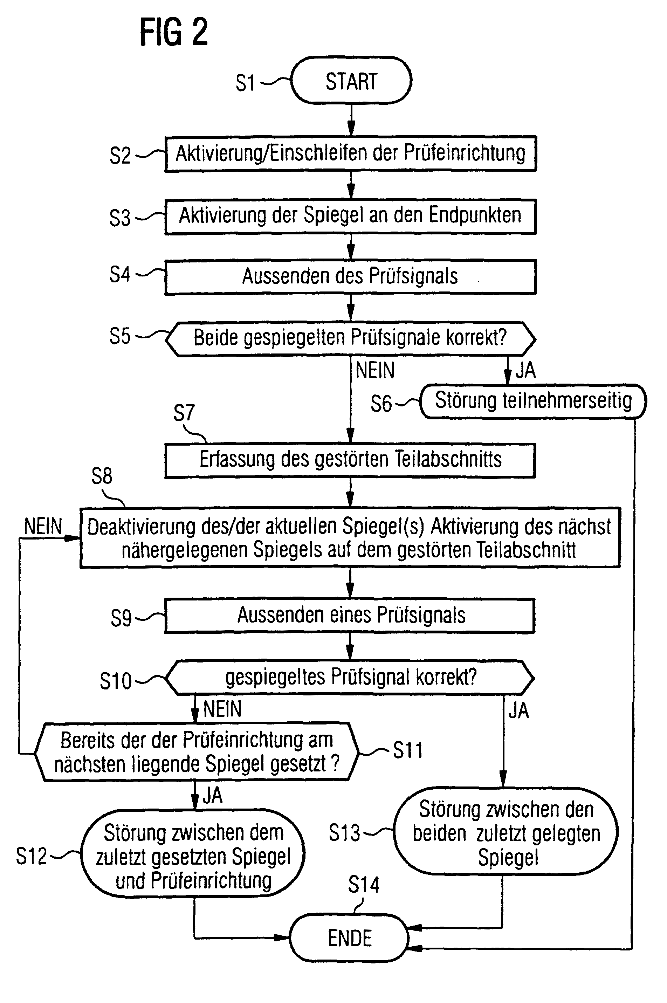

Bezugnehmend auf Figur 2 soll nunmehr das Verfahren zur Lokalisierung eines gestörten Streckenabschnitts nochmals erläutert werden.

Zuerst erfolgt der Start des Ablaufs im Schritt S1. Die Prüfeinrichtung wird in einem Schritt S2 aktiviert bzw. für den Fall einer externen Prüfeinrichtung wie in Figur 1 dargestellt an dem Auftrenn-Punkt eingeschliffen. Dann werden in einem Schritt S3 Spiegeleinrichtungen möglichst nahe an den jeweiligen Teilnehmeranschlüssen (siehe Bezugszeichen 17 in Figur 1) aktiviert. Die Prüfeinrichtung sendet dann ein Prüfsignal in Form eines vorbestimmten Test-Bitmusters aus und (Schritt S4) erfasst in einem Schritt S5, ob beide gespiegelten Prüfsignale, die sie zur Auswertung zurückgespiegelt erhält, korrekt sind. Für den Fall, dass beide gespiegelten Prüfsignale in diesem Zustand, in dem die möglichst weit abgelegenen Spiegeleinrichtungen 17 aktiviert sind, korrekt sind, muss die Störung teilnehmerseitig (Schritt S6) sein und der Ablauf wird beendet (S14), da angenommen wird, dass keine Störung der Langzeitverbindung selbst vorliegt, die durch das Netzverwaltungszentrum behoben werden kann.

Falls in dem Schritt S5 festgestellt wird, dass wenigstens eines der gespiegelten Signale gestört ist oder gar nicht zurückgespiegelt wird, wird in einem Schritt S7 aus dieser Spiegel-Antwort der Prüfsignale auf den gestörten Streckenabschnitt geschlossen.

Dann wird in einem Schritt S8 in dem gestörten Teilabschnitt der nächstnähergelegene Spiegel aktiviert und dazu vorher der aktuell aktivierte Spiegel deaktiviert. Danach wird in einem Schritt S9 wiederum ein Prüfsignal ausgesendet und in einem Schritt S10 durch die Prüfeinrichtung erfasst, ob das gespiegelte Prüfsignal korrekt ist. Für den Fall, dass sich in diesem Schritt S10 herausstellen sollte, dass das gespiegelte Prüfsignal nunmehr korrekt ist, ist die Störung in einem Schritt S13 in dem Streckenabschnitt zwischen den beiden zuletzt aktivierten Spiegeln lokalisiert und der Ablauf kann in dem Schritt S14 beendet werden.

Für den Fall, dass der Schritt S10 ergibt, dass das gespiegelte Prüfsignal nicht korrekt zurückgespiegelt wurde, wird in einem Schritt S11 geprüft, ob bereits der der Prüfeinrichtung am nächsten liegende Spiegel gesetzt ist. Wenn diese Prüfung mit Nein beantwortet wird, geht der Ablauf zu Schritt S8 zurück, so dass fortschreitend der gerade aktivierte Spiegel sich stufenweise der Prüfeinrichtung nähert.

Falls die Prüfung im Schritt S11 ergibt, dass bereits der der Prüfeinrichtung am nächsten liegende Spiegel aktiviert wurde, ist die Störung in dem Streckenabschnitt erfasst worden, der zwischen dem zuletzt aktivierten Spiegel (der der Prüfeinrichtung am nächsten liegt) und der Prüfeinrichtung selbst liegt und der Ablauf kann in Schritt S14 beendet werden.

## Patentansprüche

1. Verfahren zur Lokalisierung eines gestörten Streckenabschnitts in einer Langzeitverbindung,
die aus mehreren Streckenabschnitten (2, 3, 4) aufgebaut wird,
welche untereinander durch mehrere Vermittlungsstellen verbunden sind,
aufweisend die folgenden Schritte:
.a) Aktivieren oder Einschleifen einer Prüfeinrichtung (5) an einem Auftrenn-PUnkt (6) der durch Auftrennen der Langzeitverbindung mit Hilfe eines Koppelschalters innerhalb einer der Vermittlungsstellen gebildet wird, und
b) ferngesteuertes, fortschreitendes Aktivieren von Spiegeleinrichtungen (17), die eingehende Signale unverändert zurücksenden, stufenweise von einem von dem Auftrenn-Punkt (6) abgelegenen Punkt der Langzeitverbindung aus in Richtung des Auftrenn-Punkts (6), bis der gestörte Streckenabschnitt (2, 3, 4) der Langzeitverbindung gefunden ist, wobei
die Prüfeinrichtung (5) zu der jeweils aktivierten Spiegeleinrichtung (17) ein Prüfsignal sendet und das gespiegelte Signal auf seine Störungsfreiheit hin auswertet.

2. Verfahren nach Anspruch 1,
**dadurch gekennzeichnet,**
**dass** die Spiegeleinrichtungen (17) jeweils in Koppelnetzen zwischen zwei Streckenabschnitten (2, 3, 4) aktiviert werden.

3. Verfahren nach einem der Ansprüche 1 oder 2,
**dadurch gekennzeichnet,**
**dass** die Prüfeinrichtung (5) zwei Nutzkanäle aufweist.

4. Verfahren nach einem der vorhergehenden Ansprüche,
**dadurch gekennzeichnet,**
**dass** die Prüfeinrichtung (5) ein vorbestimmtes Test-Bitmuster aussendet.

5. System zur Lokalisierung eines gestörten Streckenabschnitts in einer Langzeitverbindung, die aus mehreren Streckenabschnitten (2, 3, 4) aufgebaut wird,
welche untereinander durch mehrere Vermittlungsstellen verbunden sind,
aufweisend:
a) eine Prüfeinrichtung (5), die an einem Auftrenn-Punkt (6), der durch Auftrennen der Langzeitverbihdung mit Hilfe eines Koppelschalters innerhalb einer der Vermittlungsstellen gebildet werden kann, aktiviert oder eingeschleift wird, und
b) eine Netz-Steuereinheit (1) zum stufenweisen ferngesteuerten Aktivieren von Spiegeleinrichtungen (17), die eingehende Signale unverändert zurücksenden, von einem von dem Auftrenn-Punkt (6) abgelegenen Punkt der Langzeitverbindung aus in Richtung der Prüfeinrichtung (5), bis der gestörte Streckenabschnitt (2, 3, 4) der Langzeitverbindung gefunden ist,
wobei die Prüfeinrichtung (5) zu der jeweils aktivierten Spiegeleinrichtung ein Prüfsignal sendet und das gespiegelte Signal auf seine Störungsfreiheit hin auswertet.

6. System nach Anspruch 5,
**dadurch gekennzeichnet,**
**dass** die Spiegeleinrichtungen (17) jeweils in Koppelnetzen zwischen zwei Streckenabschnitten aktivierbar sind.

7. System nach einem der Ansprüche 5 oder 6,
**dadurch gekennzeichnet,**
**dass** die Prüfeinrichtung (5) zwei Nutzkanäle hat.

8. System nach einem der vorhergehenden Ansprüche,
**dadurch gekennzeichnet,**
**dass** eine den jeweiligen Streckenabschnitten (2, 3, 4) zugeordneten Vermittlungsstellen jeweils ein Remote-Terminal zum aktivieren/deaktivieren der Spiegeleinrichtungen (17) der Streckenabschnitte (2, 3, 4) aufweisen.

## Claims

1. Method for locating a faulty route section in a long-term connection
which is constructed from a plurality of route sections (2, 3, 4), said route sections being connected to one another by a plurality of exchanges,
comprising the following stages:
a) activation or connecting-in of a testing device (5) at a point of interruption (6) which is formed by interruption of the long-term connection with the help of a coupling switch within one of the exchanges, and
b) remote-controlled, progressive activation of mirroring devices (17), which send back incoming signals unchanged, starting from a point in the long-term connection a distance away from the point of interruption (6) and progressing in the direction of the point of interruption (6), until the faulty route section (2, 3, 4) of the long-term connection is found, whereby
the testing device (5) transmits a test signal to each activated mirroring device (17) and evaluates the reflected signal for faults.

2. Method according to Claim 1,
**characterized in that**
the mirroring devices (17) are each activated in switching networks between two route sections (2, 3, 4).

3. Method according to one of Claims 1 or 2,
**characterized in that**
the testing device (5) has two user channels.

4. Method according to one of the above claims,
**characterized in that**
the testing device (5) transmits a predefined testing bit pattern.

5. System for locating a faulty route section in a long-term connection which is constructed from a plurality of route sections (2, 3, 4),
said route sections being connected to one another by a plurality of exchanges,
comprising:
a) a testing device (5) which is activated or connected in at a point of interruption (6) which can be formed by interruption of the long-term connection with the help of a coupling switch within one of the exchanges, and
b) a network management application (1) for the progressive, remote-controlled activation of mirroring devices (17), which send back incoming signals unchanged, starting from a point in the long-term connection a distance away from the point of interruption (6) and progressing in the direction of the testing device (5), until the faulty route section (2, 3, 4) of the long-term connection is found,
whereby
the testing device (5) transmits a test signal to each activated mirroring device and evaluates the reflected signal for faults.

6. System according to Claim 5,
**characterized in that**
the mirroring devices (17) can each be activated in switching networks between two route sections (2, 3, 4).

7. System according to one of Claims 5 or 6,
**characterized in that**
the testing device (5) has two user channels.

8. System according to one of the above claims,
**characterized in that**
the exchanges allocated to the route sections (2, 3, 4) in question each have a remote terminal for activating/deactivating the mirroring devices (17) of the route sections (2, 3, 4).

## Revendications

1. Procédé de localisation d'une section défectueuse dans une liaison semi-permanente,
qui est constituée de plusieurs sections (2, 3, 4)
qui sont reliées entre elles par plusieurs centraux de commutation,
comportant les étapes suivantes :
a) activation ou insertion d'un dispositif de test (5) en un point de coupure (6) qui est formé par la coupure de la liaison semi-permanente à l'aide d'un interrupteur de connexion à l'intérieur de l'un des centraux de commutation, et
b) activation à distance et progressive de dispositifs de réflexion (17) qui renvoient sans modification les signaux entrants, pas à pas depuis un point de la liaison semi-permanente distant du point de coupure (6) et en direction du point de coupure (6) jusqu'à ce que la section (2, 3, 4) défectueuse de la liaison semi-permanente soit trouvée,
le dispositif de test (5) envoyant un signal de test au dispositif de réflexion (17) respectivement activé et évaluant le signal réfléchi quant à l'absence de défaut.

2. Procédé selon la revendication 1, **caractérisé par le fait que** les dispositifs de réflexion (17) sont activés à chaque fois dans des réseaux de connexion entre deux sections (2, 3, 4).

3. Procédé selon l'une des revendications 1 ou 2, **caractérisé par le fait que** le dispositif de test (5) comporte deux canaux utiles.

4. Procédé selon l'une des revendications précédentes, **caractérisé par le fait que** le dispositif de test (5) envoie une configuration de bits de test prédéfinie.

5. Système de localisation d'une section défectueuse dans une liaison semi-permanente qui est constituée de plusieurs sections (2, 3, 4) qui sont reliées entre elles par plusieurs centraux de commutation,
comportant :
a) un dispositif de test (5) qui est activé ou inséré en un point de coupure (6), qui peut être formé par la coupure de la liaison semi-permanente à l'aide d'un interrupteur de connexion à l'intérieur de l'un des centraux de commutation, et
b) une unité de commande de réseau (1) pour l'activation à distance et progressive de dispositifs de réflexion (17) qui renvoient sans modification les signaux entrants, depuis un point de la liaison semi-permanente distant du point de coupure (6) et en direction du dispositif de test (5) jusqu'à ce que la section (2, 3, 4) défectueuse de la liaison semi-permanente soit trouvée,
le dispositif de test (5) envoyant un signal de test au dispositif de réflexion respectivement activé et évaluant le signal réfléchi quant à l'absence de défaut.

6. Système selon la revendication 5, **caractérisé par le fait que** les dispositifs de réflexion (17) sont activables à chaque fois dans des réseaux de connexion entre deux sections.

7. Système selon l'une des revendications 5 ou 6, **caractérisé par le fait que** le dispositif de test (5) comporte deux canaux utiles.

8. Système selon l'une des revendications précédentes, **caractérisé par le fait que** les centraux de commutation associés aux sections respectives (2, 3, 4) comportent chacun un terminal distant pour l'activation / désactivation des dispositifs de réflexion (17) des sections (2, 3, 4).
